# EUROPÄISCHE PATENTSCHRIFT

(11) **EP 2 127 273 B1**
(45) Veröffentlichungstag und Bekanntmachung des Hinweises auf die Patenterteilung: **08.08.2012**
(21) Anmeldenummer: 08708764.9
(22) Anmeldetag: 07.02.2008
(51) Int. Cl.: H04L 12/58, H04W 4/12, H04L 29/06

(54) **VERFAHREN ZUM ABSPIELEN EINER SOUNDDATEI AUF EINEM EMPFÄNGER-MOBILTELEFON MITTELS EINES SENDER-MOBILTELEFONS SOWIE COMPUTERPROGRAMMPRODUKT**
METHOD FOR PLAYING BACK A SOUND FILE ON A RECEIVING MOBILE TELEPHONE BY MEANS OF A TRANSMITTING MOBILE TELEPHONE AND A COMPUTER PROGRAM PRODUCT
PROCÉDÉ DE LECTURE D'UN FICHIER SON SUR UN TÉLÉPHONE MOBILE RÉCEPTEUR AU MOYEN D'UN TÉLÉPHONE MOBILE ÉMETTEUR ET PRODUIT DE PROGRAMME INFORMATIQUE

(30) Priorität: 16.02.2007 DE 102007008332
(43) Veröffentlichungstag der Anmeldung: 02.12.2009
(73) Patentinhaber: Blue Lion Mobile Gmbh, 50674 Köln (DE)
(72) Erfinder: SCHULTE, Christian Ralph, 50672 Köln (DE); ROST, Cornelius, 50672 Köln (DE)
(74) Vertreter: Patentanwälte Freischem
(86) Internationale Anmeldenummer: PCT/EP2008/051478
(87) Internationale Veröffentlichungsnummer: WO 2008/098870

(56) Entgegenhaltungen:
- EP-A- 1 276 301
- EP-A- 1 705 881
- US-A1- 2002 110 224
- US-A1- 2007 036 292
- "Digital cellular telecommunications system (Phase 2+); Universal Mobile Telecommunications System (UMTS); Technical realization of Short Message Service (SMS) (3GPP TS 23.040 version 6.8.1 Release 6); ETSI TS 123 040" ETSI STANDARDS, LIS, SOPHIA ANTIPOLIS CEDEX, FRANCE, Bd. 3-T2, Nr. V6.8.1, 1. Oktober 2006 (2006-10-01), XP014035453 ISSN: 0000-0001

## Beschreibung

Die Erfindung betrifft ein Verfahren zum Abspielen einer Sounddatei auf einem Empfänger-Mobiltelefon mittels eines Sender-Mobiltelefons sowie ein Computerprogrammprodukt.

Ohne Bezug auf Mobiltelefone zu nehmen, ist aus US 2007/0036292 A1 ein computer-basiertes Instant-Messaging System bekannt, mit welchem unter anderem Sprachmitteilungen zwischen zwei oder mehr Computern übertragbar sind.

Aus EP 1 705 881 A1 ist es bekannt, Mobiltelefone so zu konfigurieren, dass eingehende Nachrichten bestimmter, vorauszuwählender Absender direkt auf dem Display des Mobiltelefons angezeigt werden.

Aus der Praxis sind im wesentlichen zwei Möglichkeiten zum Abspielen von Sounddateien auf Mobiltelefonen bekannt. Gemäß einer ersten Möglichkeit können auf dem Mobiltelefon gespeicherte Sounddateien von einem Benutzer manuell aufgerufen und mit dem jeweiligen Betriebssystem oder mit einer durch das Betriebssystem aktivierten JAVA-Applikation abgespielt werden. Gemäß einer zweiten Möglichkeit kann der Benutzer eines Mobiltelefons Klingeltöne für eingehende Anrufe und für eingehende Nachrichten festlegen. Diese Klingeltöne werden dadurch aktiviert, dass Dritte den Benutzer anrufen oder diesem eine Nachricht übermitteln. Bei den beiden vorstehend beschriebenen Möglichkeiten legt der Benutzer des Mobiltelefons jeweils selbst fest, welche Sounddatei abgespielt werden soll.

Aus EP-A-1 276 301 ist es ferner bekannt, Kurzmitteilungen (SMS) mit angehängten Sounddateien zu verschicken. Statt die Sounddateien selbst an die SMS anzuhängen, wird in EP-A-1 276 301 auch vorgeschlagen, entsprechende Codes an Kurzmitteilungen (SMS) anzuhängen, welche nach dem Empfang das Abspielen von dazugehörigen Sounddateien auf dem Empfänger-Mobiltelefon bewirken sollen.

Die Veröffentlichung "Digital cellular telecommunications system (Phase 2+); Universal Mobile Telecommunications System (UMTS); Technical realization of Short Message Service (SMS) (3GPP TS 23.040 version 6.8.1 Release 6); ETSI TS 123 040", ETSI STANDARDS, LIS, SOPHIA ANTIPOLIS CEDEX, FRANCE, Bd. 3-T2, Nr. V6.8.1, 1. Oktober 2006, XP014035453 ISSN: 0000-0001, befasst sich unter anderem ebenfalls mit Einzelheiten zum SMS-Versand. In Abschnitt 3.10.4 werden verschiedene Möglichkeiten beschrieben, wie per SMS mit Hilfe eines "Enhanced Messaging Service" Sounds übertragbar sein sollen.

Der Erfindung liegt die Aufgabe zugrunde, ein Verfahren zum Abspielen einer Sounddatei sowie ein Computerprogrammprodukt zur Verfügung zu stellen, welche den Unterhaltungswert von Mobiltelefonen steigern und einen verbesserten Schutz der Privatsphäre der Nutzer ermöglichen.

Die Lösung der Aufgabe erfolgt mit dem Merkmalen der Anspruche 1 bzw. 12.

Das erfindungsgemäße Verfahren umfasst folgende Schritte:
a) Ausführen einer Applikation auf dem Sender-Mobiltelefon und auf dem Empfänger-Mobiltelefon,
b) mit Hilfe der Applikation des Sender-Mobiltelefons wird ein Identifikator einer Sounddatei und eine Kennung eines Empfänger-Mobiltelefons ausgewählt,
c) der Identifikator der Sounddatei und die Kennung des Empfänger-Mobiltelefons werden an einen Server übermittelt,
d) von dem Server wird ein Steuerbefehl in Verbindung mit dem Identifikator der Sounddatei und/oder der zu dem Identifikator gehörigen Sounddatei an das Empfänger-Mobiltelefon übermittelt,
e) die ausgeführte Applikation auf dem Empfänger-Mobiltelefon wird aufgrund des eingegangenen Steuerbefehls veranlasst, die Sounddatei unmittelbar auf dem Empfänger-Mobiltelefon abzuspielen,
f) wobei die Applikation eine JAVA-Applikation mit mindestens einem MID1et ist,
g) wobei das Verfahren nur zwischen Sender-Mobiltelefonen und Empfänger-Mobiltelefonen ausführbar ist, auf welchen die JAVA-Applikation installiert ist und ausgeführt wird und welche auf den gleichen oder miteinander verbundene Server zugreifen und
h) wobei von dem Sender-Mobiltelefon (102; 104; 106) eine Identifikationskennung des Sender-Mobiltelefons (102, 104, 106) an den Server (108) übermittelt wird und ein Vergleich dieser Identifikationskennung mit in einem Register hinterlegten Identifikationskennungen durchgeführt wird, wobei das Abspielen der Sounddatei auf dem Empfänger-Mobiltelefon (102; 104; 106) unterdrückt wird, wenn die Identifikationskennung des Sender-Telefons (102; 104; 106) nicht mit einer Identifikationskennung des Registers übereinstimmt.

Mit dem erfindungsgemäßen Verfahren ist es möglich, Sounddateien mittels eines ersten Mobiltelefons (dem sogenannten Sender-Mobiltelefon) auf ein zweites Mobiltelefon (das sogenannte Empfänger-Mobiltelefon) zu übertragen und dort unmittelbar abzuspielen, d.h. ohne dass der Nutzer des Empfänger-Mobiltelefons Einfluss auf den Zeitpunkt des Abspielens oder die Auswahl der Sounddatei nehmen kann. Dies ermöglicht eine neuartige Form non-verbaler Mobiltelefon-Kommunikation. Insbesondere aufgrund der Tatsache, dass das erfindungsgemäße Verfahren ein sofortiges Abspielen von dem Nutzer des Empfänger-Mobiltelefons unbekannten Klangmitteilungen ermöglicht, ist das Verfahren mit einem hohem Unterhaltungswert verbunden.

Gemäß dem erfindungsgemäßen Verfahren wird zum Auswählen der Sounddatei auf dem Sender-Mobiltelefon eine JAVA-Applikation aktiviert, wobei unter Aktivieren (auch nachfolgend) insbesondere ein Starten und/oder Ausführen der JAVA-Applikation verstanden wird. Ferner wird zum Abspielen der Sounddatei auf dem Empfänger-Mobiltelefon eine JAVA-Applikation aktiviert. Durch die Aktivierung einer JAVA-Applikation kann gewährleistet werden, dass das Verfahren unabhängig von etwaig unterschiedlichen Betriebssystemen des Sender-Mobiltelefons und des Empfänger-Mobiltelefons durchführbar ist. Dies ist insbesondere dann der Fall, wenn die Funktionen der JAVA-Applikation weitgehend unabhängig von dem Betriebssystem ausführbar sind.

Dadurch, dass sowohl auf dem Sender-Mobiltelefon als auch auf dem Empfänger-Mobiltelefon eine JAVA-Applikation aktiviert ist, welche auf den gleichen oder miteinander verbundene Server zugreift, ist es ohne großen Aufwand möglich, die Anwendbarkeit des erfindungsgemäßen Verfahrens auf bestimmte Nutzergruppen von Mobiltelefonen zu beschränken. Beispielsweise kann vorgegeben werden, dass das erfindungsgemäße Verfahren nur zwischen solchen Nutzern anwendbar ist, welche die JAVA-Applikation installiert und aktiviert haben.

In einer weiteren Ausführungsform wird durch die JAVA-Applikation ein Zugriff auf mindestens eine Funktion des Betriebssystems ermöglicht. Dies hat den Vorteil, dass alle Funktionen des Betriebssystems, auf welche die JAVA-Applikation zugreifen kann, nicht Bestandteil der JAVA-Applikation selbst sein müssen.

So kann beispielsweise durch die JAVA-Applikation ein Zugriff auf eine Wiedergabefunktion des Betriebssystems erfolgen und die Sounddatei unmittelbar, d.h. ohne Eingabe eines Nutzers des Empfänger-Mobiltelefons, durch das Betriebssystem abgespielt werden. Diese Variante ist insbesondere für die Durchführung auf Mobiltelefonen geeignet, deren Betriebssystem ein Wiedergabetool für Sounddateien umfasst und das durch die JAVA-Applikation aktiviert werden kann. Die JAVA-Applikation selbst benötigt dann nur geringen zusätzlichen Speicherplatz auf dem Mobiltelefon.

Die Sounddatei kann alternativ auch aufgrund des von dem Server an das Empfänger-Mobiltelefon übermittelten Steuerbefehls unmittelbar, d.h. ohne Eingabe eines Nutzers des Empfänger-Mobiltelefons, durch die JAVA-Applikation abgespielt werden. Diese Variante ist insbesondere für alle Mobiltelefone geeignet, deren Betriebssystem kein Wiedergabetool für Sounddateien umfasst oder auf deren Betriebssystem nicht über die JAVA-Applikation zugegriffen werden kann. Generell ist diese Variante jedoch bei allen Mobiltelefonen anwendbar.

Gemäß einer weiteren Variante des erfindungsgemäßen Verfahrens wird von dem Sender-Mobiltelefon eine Identifikationskennung des Sender-Mobiltelefons an den Server übermittelt und ein Vergleich dieser Identifikationskennung mit in einem Register hinterlegten Identifikationskennungen durchgeführt. Dabei wird das Abspielen der Sounddatei auf dem Empfänger-Mobiltelefon unterdrückt, wenn die Identifikationskennung des Sender-Mobiltelefons nicht mit einer Identifikationskennung des Registers übereinstimmt. Unter Register wird in diesem Zusammenhang ein Datensatz, z.B. in Form einer Tabelle verstanden, welcher entweder auf einem Speicherchip des Empfänger-Mobiltelefons oder auf einem Massenspeicher, z.B. auf einer Festplatte des Servers, gespeichert ist.

Bei dieser Variante kann jeder Nutzer eines Empfänger-Mobiltelefons individuell festlegen, von welchen Mobiltelefonen aus Sounddateien auf seinem Mobiltelefon abspielbar sein sollen. Dazu muss der Nutzer lediglich die zu diesen Mobiltelefonen gehörenden Identifikationskennungen in ein Register eintragen. Als Identifikationskennung kann beispielsweise die Rufnummer der in einem Mobiltelefon befindlichen SIM-Karte verwendet werden. Anstelle von Einzeleinträgen können auch alle Rufnummern oder Gruppen von Rufnummern in einem Schritt freigeschaltet werden, beispielsweise alle Rufnummern des eigenen Telefonbuchs.

Wenn nicht nur alle Rufnummern des eigenen Telefonbuchs, sondern alle existierenden Rufnummern freigeschaltet sein sollen, ist es weder erforderlich Identifikationskennungen in das Register einzutragen noch den Vergleich durchzuführen. In diesem Fall können sämtliche Steuersignale bzw. Sounddateien ohne vorherigen Vergleich zum Empfänger-Mobiltelefon übermittelt werden.

In der Praxis wird das erfindungsgemäße Verfahren im Rahmen einer bestimmten Mobiltelefonnutzergruppe (Community) angeboten, wobei jedes Mitglied einen Mitgliedsnamen erhält. Der Mitgliedsname ist im einfachsten Fall die Telefonnummer des Mobiltelefons des jeweiligen Mitglieds. Jeder Nutzer eines Empfänger-Mobiltelefons kann wahlweise sein Mobiltelefon für den Sounddatei-Empfang von allen Mitglieder der Community freigeben oder einzelne oder Gruppen von Mitgliedern zum Versand von Sounddateien an den Empfänger autorisieren. Wenn Gruppen von Mitgliedern oder einzelne Mitglieder zum Versand von Sounddateien an dem Empfänger autorisiert werden, werden die entsprechenden Telefonnummern dieser Mitglieder in dem Register des autorisierenden Mitgliedes hinterlegt. Anstelle oder zusätzlich zur Telefonnummer können auch andere Identifikationsmerkmale in dem Register gespeichert werden, beispielsweise der Mitgliedsname. Ferner kann das Register auch weitere Einträge zulassen, beispielsweise die Begrenzung einer Autorisierung auf bestimmte Tageszeiten oder beliebig definierte Zeiträume.

In einer weiteren vorteilhaften Ausführungsform des erfindungsgemäßen Verfahrens wird das Register auf dem Server gespeichert und der Vergleich der Identifikationskennung des Sender-Mobiltelefons mit den in dem Register hinterlegten Identifikationskennungen von dem Server durchgeführt. Dadurch werden die Systemressourcen, insbesondere des Prozessors und des Datenspeichers des Empfänger-Mobiltelefons, geschont und sichergestellt, dass das erfindungsgemäße Verfahren die Leistungsfähigkeit des jeweiligen Mobiltelefons möglichst wenig beeinflusst.

In einer alternativen Ausführungsform wird das Register auf dem Empfänger-Mobiltelefon gespeichert und der Vergleich der Identifikationskennung des Sender-Mobiltelefons mit den in dem Register hinterlegten Identifikationskennungen von dem Empfänger-Mobiltelefon durchgeführt. Diese Ausführungsform eignet sich insbesondere zur Durchführung auf leistungsstarken Mobiltelefonen, deren Systemressourcen durch die Speicherung und Verarbeitung der Registerdaten nur in geringem Maße beansprucht werden. Wenn das Register in dem Empfänger-Mobiltelefon gespeichert wird, werden sämtliche von Nutzern vorgenommenen Änderungen ohne zeitliche Verzögerungen wirksam, da für die Wirksamkeit von Änderungen eine vorherige Datenübertragung an den Server nicht erforderlich ist.

In einer weiteren praktischen Ausführungsform des erfindungsgemäßen Verfahrens werden in einem auf dem Sender-Mobiltelefon gespeicherten Register Identifikationskennungen von autorisierten Empfänger-Mobiltelefonen gespeichert. Diese Identifikationskennungen werden vor der Übermittlung des Identifikators der Sounddatei und der Kennung des Empfänger-Mobiltelefons an den Server mit der zu sendenden Kennung des Empfänger-Mobiltelefons verglichen. Wenn bei diesem Vergleich festgestellt wird, daß das Register keine mit der Kennung des Empfänger-Mobiltelefons übereinstimmende Identifikationskennung aufweist, wird eine Übermittlung des Identifikators und der Sounddatei unterdrückt. Mit dieser Verfahrensvariante kann bereits durch das Sender-Mobiltelefon geprüft werden, ob der potentielle Empfänger einer Sounddatei den Sender zum Abspielen von Sounddateien autorisiert hat. Diese Prüfung im Sender-Mobiltelefon reduziert den Datentraffic im Hinblick auf zu übermittelnde und/oder abzuspielende Sounddateien auf ein Minimum, da nicht autorisierte Steuerbefehle unmittelbar im Sender-Mobiltelefon unterdrückt und somit gar nicht erst an den Server bzw. über den Server an das Empfänger-Mobiltelefon übermittelt werden.

Gemäß einer weiteren alternativ oder kumulativ anwendbaren Ausführungsform ist es vorteilhaft, wenn zur Auswahl einer Kennung eines Empfänger-Mobiltelefons auf dem Sender-Mobiltelefon eine Liste von zu dem Sender-Mobiltelefon in dem Register gespeicherten Identifikationskennungen von Empfänger-Mobiltelefonen und/oder zu den Identifikationskennungen gehörigen Mitgliedsnummern und/oder Mitgliedsnamen angezeigt wird. Die Liste kann beispielsweise dadurch erfolgen, dass vor der Auswahl von dem Sender-Mobiltelefon eine Abfrage an den Server erfolgt (pull). Alternativ kann beispielsweise in regelmäßigen Abständen vom Server eine aktualisierte Liste an potentielle Sender-Mobiltelefone übermittelt werden (push). Vorteilhaft an dieser Ausführungsform ist, dass der Benutzer des erfindungsgemäßen Verfahrens unmittelbar bei der Auswahl des Empfängers darüber informiert werden kann, welche Empfänger ihn autorisiert haben und daher das Abspielen von Sounddateien durch ihn akzeptieren. Das erleichtert die Auswahl und verhindert, dass ein Benutzer eines Sender-Mobiltelefons Kennungen von nicht autorisierten Empfänger-Mobiltelefonen auswählt.

In einer weiteren vorteilhaften Ausführungsform wird zur Erzeugung der vorstehend genannten Liste von autorisierten Empfänger-Mobiltelefonen mit Hilfe des Servers überprüft, auf welchen autorisierten Empfänger-Mobiltelefonen die JAVA-Applikation aktiviert ist. Diese Überprüfung wird insbesondere durchgeführt, um ausschließlich Kennungen von autorisierten Empfänger-Mobiltelefonen anzuzeigen, auf welchen die JAVA-Applikation aktiviert ist. Somit kann es zu einer notwendigen Bedingung gemacht werden, dass für ein Abspielen von Sounddateien sowohl auf dem Sender-Mobiltelefon als auch auf dem Empfänger-Mobiltelefon eine bestimmte JAVA-Applikation aktiviert worden ist. Dadurch lässt sich der Nutzerkreis kontrolliert auf gewisse Nutzergruppen, sogenannte Communities, begrenzen. Die Systemressourcen des Empfänger-Mobiltelefons können weiter entlastet werden, wenn bei einem erfindungsgemäßen Verfahren vor der Übermittlung der ausgewählten Sounddatei von dem Server an das Empfänger-Mobiltelefon überprüft wird, ob die ausgewählte Sounddatei bereits auf dem Empfänger-Mobiltelefon gespeichert ist und wenn in diesem Fall eine erneute Übermittlung der ausgewählten Sounddatei von dem Server an das Empfänger-Mobiltelefon unterbleibt. Eine solche Überprüfung kann entweder durch den Server oder durch das Empfänger-Mobiltelefon erfolgen. Dadurch wird wirksam vermieden, dass Sounddateien mehrfach auf ein Mobiltelefon übertragen werden und dadurch auf dem Empfänger-Mobiltelefon mehrfach Speicherplatz durch identische Dateien beansprucht wird. Ferner kann so der Datentraffic ggf. erheblich reduziert werden.

Zur Überprüfung durch das Empfänger-Mobiltelefon kann beispielsweise vor der Übermittlung der Sounddatei ein Informationssignal von dem Server an das Empfänger-Mobiltelefon übermittelt werden, welches Größe und/oder weitere Identifikationsmerkmale, z.B. den Dateinamen der Sounddatei, enthält. Anhand dieser Informationen kann das Empfänger-Mobiltelefon prüfen, ob die durch das Informationssignal spezifizierte Sounddatei bereits auf dem Empfänger-Mobiltelefon gespeichert ist. Ist dies der Fall wird eine erneute Übermittlung der Sounddatei unterdrückt.

Zur Überprüfung durch den Server kann beispielsweise zunächst von dem Server eine Aufforderung an das Empfänger-Mobiltelefon gesendet werden, Größe und/oder weitere Identifikationsmerkmale sämtlicher auf dem Empfänger-Mobiltelefon gespeicherter Sounddateien an den Server zu übermitteln. Nach Erhalt dieser Informationen wird mit Hilfe des Servers geprüft, ob die zu sendende Sounddatei bereits auf dem Empfänger-Mobiltelefon gespeichert ist. Ist dies der Fall, wird eine erneute Übermittlung der Sounddatei unterdrückt.

Unabhängig davon, ob die Überprüfung durch das Empfänger-Mobiltelefon oder durch den Server erfolgt, ist die Prüfung besonders zuverlässig, wenn eine Unterdrückung nur dann erfolgt, wenn sowohl der Dateiname als auch die Größe der zu übermittelnden Sounddatei mit einer auf dem Empfänger-Mobiltelefon gespeicherten Datei übereinstimmen.

In einer weiteren praktischen Ausführungsform des erfindungsgemäßen Verfahrens wird vor der Auswahl eines Identifikators einer Sounddatei über den Server ausgelesen, welche Sounddateien auf einem Empfänger-Mobiltelefon gespeichert sind. Dann können zusätzlich zu auf dem Server oder ggf. auf dem Sender-Mobiltelefon gespeicherten und übermittelbaren Sounddateien auch auf dem Empfänger-Mobiltelefon gespeicherte Sounddateien ausgewählt und aktiviert werden. Die Zahl der Sounddateien kann dadurch folglich weiter erhöht werden.

Die Erfindung zeigt sich auch an einem Computerprogrammprodukt in Form einer JAVA-Applikation mit mindestens einem MIDIet zur Installation auf einem Mobiltelefon und zur Durchführung eines wie vorstehend beschriebenen Verfahrens.

Durch die Installation eines solchen Computerprogrammproduktes auf einem Mobiltelefon eignet sich dieses Mobiltelefon sowohl als Sender-Mobiltelefon als auch als Empfänger-Mobiltelefon im Sinne des erfindungsgemäßen Verfahrens. Die Wirkungen der vorstehend beschriebenen Module und sonstiger Elemente des Computerprogrammproduktes treten durch die Ausführung eines entsprechenden Programmcodes in einem Prozessor eines Mobiltelefons ein. Dies gilt für alle in den Ansprüchen genannten Ausführungsformen des Computerprogrammproduktes.

Wenn das Ausführungsmodul des Computerprogrammproduktes Programmcode umfasst, welcher bei seiner Ausführung in einem Prozessor eines Empfänger-Mobiltelefons einen Zugriff auf mindestens eine Funktion des Betriebssystems des Empfänger-Mobiltelefons umfasst, kann durch mittels Sender-Mobiltelefonen bewirkter Steuerbefehle beispielsweise auf Wiedergabetools des Empfänger-Mobiltelefons zurückgegriffen werden. In diesem Fall weist das Ausführungsmodul im Verhältnis zu den benötigen Systemressourcen viele Funktionen auf, da es Funktionen des Betriebssystems "mitnutzen" kann.

Hinsichtlich weiterer Vorteile des erfindungsgemäßen Computerprogramms, welche bereits im Zusammenhang mit dem erfindungsgemäßen Verfahren beschrieben wurden, wird hiermit verwiesen.

Das auf den beteiligten Mobiltelefonen ablaufende Computerprogrammprodukt kann zur Verwirklichung der Merkmale des erfindungsgemäßen Verfahrens auf Software auf dem Server sowie auf Funktionen der Betriebssysteme der Mobiltelefone zurückgreifen. Die auf den Mobiltelefonen ablaufenden Computerprogrammprodukte sind vorzugsweise so ausgebildet, dass sie, ggf. in Zusammenwirkung mit der Software auf dem Server und/oder den Betriebssystemfunktionen, alle Merkmale des erfindungsgemäßen Verfahrens verwirklichen.Nachfolgend werden weitere Ausführungsformen der Erfindung unter Bezugnahme auf die Zeichnungen beschrieben.

Es zeigen:
- Fig. 1: ein Beispiel für eine Systemarchitektur zur Durchführung eines erfindungsgemäßen Verfahrens in einer schematischen Darstellung und
- Fig. 2: ein Ablaufdiagramm einer vorteilhaften Ausführungsform des erfindungsgemäßen Verfahrens in einer schematischen Darstellung.

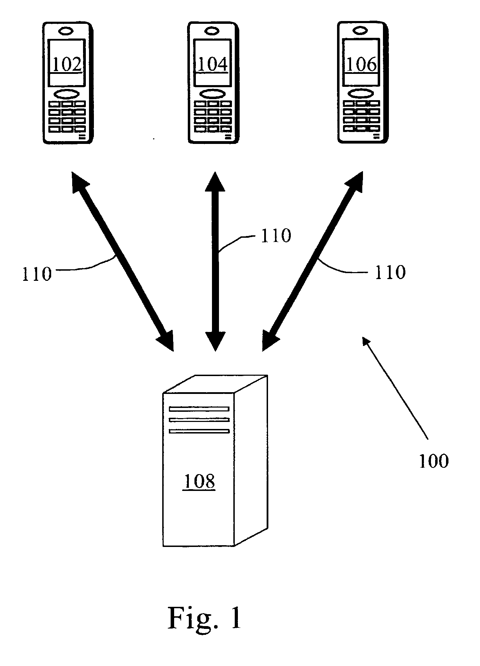

Figur 1 zeigt ein Beispiel für eine Sytemarchitektur 100 mit einem ersten Mobiltelefon 102, einem zweiten Mobiltelefon 104, einem dritten Mobiltelefon 106 und einem Backend Server 108. Die Mobiltelefone 102, 104, 106 stehen über Socket-Verbindungen oder http-Verbindungen 110, beispielsweise über GSM- oder UMTS-Verbindungen, oder beliebige andere Datenübertragungsprotokolle (z.B. WLAN, Infrarot, Bluetooth etc.) mit dem Backend Server 108 in Verbindung. Jedes der in Fig. 1 dargestellten Mobiltelefone 102, 104, 106 kann sowohl als Sender-Mobiltelefon als auch als Empfänger-Mobiltelefon im Sinne der Erfindung verwendet werden.

Auf jedem der Mobiltelefone 102, 104, 106 ist ein erfindungsgemäßes Computerprogrammprodukt installiert und aktiviert. Vorliegend handelt es sich bei dem Computerprogrammprodukt um einen mobilen JAVA Client, welcher insbesondere folgende Funktionen umfasst:
- ein Nutzer-Interface, auch "Graphical User Interface" (GUI) genannt,
- eine Kommunikations- und Verschlüsselungs-Logik, um mit dem Backend Server 108 Daten auszutauschen,
- eine Handy-Anpassungs-Intelligenz (z.B. in Bezug auf den jeweiligen Screen) sowie
- eine Auto-Update Funktion für Client Updates,
wobei die beiden letztgenannten Funktionen den Bedienkomfort steigern.

Der Backend Server 108 besteht im wesentlichen aus einer Datenbank, einer Software und einer Schnittstelle zum Datenaustausch, wobei der Datenaustausch beispielsweise über das Hypertext Transfer Protocol (http) und/oder über die Extensible Markup Language (xml) erfolgt. Der Aufbau des Backend Servers 108 kann mehrere Funktionsschichten umfassen und greift dabei auf verschiedene Standardtechnologien zurück, z.B.:
- JAVA Features (z.B. J2SE 1.5; J2EE 1.4)
- Server Komponenten (z.B. Apache Tomcat; MySQL)
- Technologien und Frameworks (z.B. AXIS/SOAP; HTTP/HTTPS; XML/REST; JavaMAIL; RMI; Spring; JBOSS-Hibernate; Jasper Report).

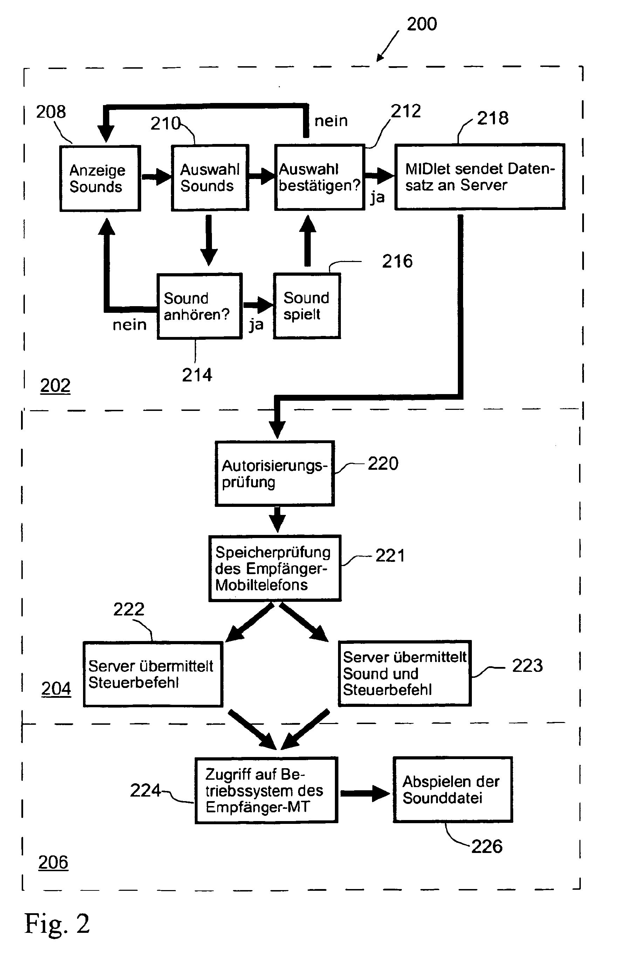

Fig. 2 zeigt ein Ablaufdiagramm 200 einer vorteilhaften Ausführungsform des erfindungsgemäßen Verfahrens in einer schematischen Darstellung. Das Ablaufdiagram umfasst einen in unterbrochenen Linen dargestellten Sender-Mobiltelefon-Bereich 202, einen in unterbrochenen Linen dargestellten Server-Bereich 204 und einen in unterbrochenen Linen dargestellten Empfänger-Mobiltelefon-Bereich 206. In diesen Bereichen sind Verfahrensschritte dargestellt, welche von den jeweils zugehörigen Geräten durchgeführt werden, d.h. die im Sender-Mobiltelefonbereich 202 dargestellten Verfahrensschritte werden von einem Sender-Mobiltelefon eingeleitet etc.

In der in Fig. 2 dargestellten Ausführungsform bestehen zwischen dem Sender-Mobiltelefon und dem Server sowie zwischen dem Empfänger-Mobil-telefon und dem Server jeweils eine GPRS-Verbindung. Sowohl auf dem Sender-Mobiltelefon als auch auf dem Empfänger-Mobiltelefon ist eine JAVA-Applikation, wie bereits im Zusammenhang mit Fig. 1 beschrieben, umfassend ein oder mehrere MIDIets, installiert und aktiviert. Mit Hilfe der JAVA-Applikation kann ein Zugriff auf das Betriebssystem des jeweiligen Mobiltelefons mittels dem JAVA-Standard MIDP 2.0 erfolgen.

Will ein Benutzer eines Sender-Mobiltelefons die in Fig. 2 dargestellte bevorzugte Ausführungsform des erfindungsgemäßen Verfahrens durchführen, lässt er sich in einem ersten Schritt 208 auf dem Display seines Mobiltelefons eine Liste verfügbarer Sounddateien (z.B. Klänge, Sprachmitteilungen, Geräusche etc.) anzeigen. Diese Liste wird grundsätzlich entweder aus dem Sender-Mobiltelefon oder über die bestehende GPRS-Verbindung vom Server abgerufen. Vorliegend erfolgt ein Abruf über die GPRS-Verbindung, da sämtliche Sounddateien auf dem Server gespeichert sind und dort verwaltet werden. Über die Tastatur oder ein anderes Eingabegerät kann der Benutzer in einem zweiten Schritt 210 eine Sounddatei auswählen.

Statt eine Sounddatei auszuwählen, kann der Benutzer des Sender-Mobiltelefons auch eine Sounddatei (z.B. eine Sprachmitteilung) aufzeichnen (nicht gezeigt).

Nach der Auswahl bzw. Aufzeichnung einer Sounddatei bestehen für den Benutzer zwei Möglichkeiten, das Verfahren fortzusetzen. Er kann entweder die Datei unmittelbar auswählen und wird daraufhin in einem Verfahrensschritt 212 gefragt, ob er die Sounddatei an einen Empfänger übermitteln möchte. Oder er kann sich für eine Sounddatei-Hörprobe entscheiden, indem er in einem Verfahrensschritt 214 eine Sicherheitsabfrage durch die Auswahl eines "ja" bestätigt oder durch die Auswahl eines "nein" ablehnt.

Wird die Sicherheitsabfrage mit der Auswahl eines "nein" abgelehnt, werden dem Nutzer wiederum gemäß dem ersten Verfahrensschritt 208 die verfügbaren Sounddateien angezeigt, und das Verfahren kann erneut begonnen werden.

Erfolgt eine Bestätigung der Sicherheitsabfrage durch ein "ja", wird die Sounddatei in einem weiteren Verfahrensschritt 216 abgespielt. Dazu wird die ausgewählte Sounddatei über die GPRS-Verbindung vom Server abgerufen und auf dem Sender-Mobiltelefon wiedergegeben. Sollte die gewählte Datei bereits auf dem Sender-Mobiltelefon gespeichert sein, kann das Abrufen dieser Datei vom Server unterbleiben.

Sobald die Sounddatei wiedergegeben wurde, wird von dem Benutzer gemäß Verfahrensschritt 212 abgefragt, ob die abgespielte Sounddatei auf einem Empfänger-Mobiltelefon abgespielt werden soll. Diese Abfrage kann wiederum mit "ja" bestätigt oder mit "nein" abgelehnt werden. Eine Ablehnung der Anfrage hat zur Folge, dass das Verfahren mit dem ersten Verfahrensschritt 208 (Anzeige der Sounddateien) erneut gestartet wird. Wird die Anfrage mit "ja" bestätigt, wird der Benutzer dazu aufgefordert, eine Empfängerrufnummer einzugeben oder einen Eintrag eines Empfängers aus seinem persönlichen Adressbuch auszuwählen. Nach der Eingabe der Empfängerrufnummer bzw. nach der Auswahl des Empfängereintrages wird in einem weiteren Verfahrensschritt 218 durch ein MIDIet des Sender-Mobiltelefons ein Datensatz an den Server übermittelt. Dieser Datensatz umfasst insbesondere folgende Informationen:
- Identifikator (z.B. Dateiname) einer Sounddatei
- als Kennung des Empfänger-Mobiltelefons die Rufnummer des Mobiltelefons, an welches die Sounddatei gesendet werden soll (alternativ zur Rufnummer kann auch eine Mietgliedsnummer und/oder ein Mitgliedsname gesendet werden) ) sowie
- eine Identifikationskennung (z.B. Telefonnummer, Mitgliedsname oder Mitgliedsnummer) des Sender-Mobiltelefons.

Wenn die Sounddateien nicht wie vorliegend alle auf dem Serverrechner gespeichert sind, können im Verfahrensschritt 208 auch auf dem Sender-Mobiltelefon gespeicherte Sounddateien angezeigt werden. Dies können empfangene oder selbst erzeugte Sounddateien sein. Solche Dateien können in diesem Fall ebenfalls im Verfahrensschritt 210 ausgewählt werden. Sofern eine solche Datei im Verfahrensschritt 210 ausgewählt wird und gemäß Verfahrensschritt 212 gesendet werden soll, umfasst der mit Verfahrensschritt 218 gesendete Datensatz zusätzlich die Sounddatei selbst.

Nach der Versendung des Datensatzes in Verfahrensschritt 218 wird in einem Verfahrensschritt 220 geprüft, ob die Identifikationskennung des Sender-Mobiltelefons von dem Nutzer des Empfänger-Mobiltelefons dazu autorisiert ist, Sounddateien auf dem Empfänger-Mobiltelefon abzuspielen. Dies erfolgt mit Hilfe eines für das Empfänger-Mobiltelefon angelegten, auf dem Server gespeicherten Datenregisters. In diesem Register sind sämtliche Identifikationskennungen enthalten, welche von dem Nutzer des Empfänger-Mobiltelefons dazu berechtigt wurden, Sounddateien zu übermitteln.

Ergibt die Prüfung, dass eine Autorisierung vorliegt, wird von dem Server über die zu dem Empfänger-Mobiltelefon bestehende Datenverbindung gemäß Verfahrensschritt 221 eine Prüfung durchgeführt, ob die zu sendende Sounddatei bereits auf dem Empfänger-Mobiltelefon gespeichert ist. Dazu werden vom dem Empfänger-Mobiltelefon Informationen zu sämtlichen gespeicherten Dateien abgefragt, welche den gleichen Dateinamen oder die gleiche Dateigröße aufweisen wie die zu sendende Sounddatei. Als Ergebnis der Abfrage erhält der Server ein Liste von Dateinamen.

Alternativ kann auf eine in dem Server gespeicherte Liste zurückgegriffen werden, in der Dateinamen und die zugehörigen Dateigrößen aller von dem Server an das Empfänger-Mobiltelefon übertragenen Dateien eingetragen sind.

Die jeweilige Liste wird mit der zu sendenden Sounddatei verglichen. Sofern die Liste einen Dateinamen enthält, welcher mit der zu sendenden Sounddatei übereinstimmt, wird gemäß Verfahrensschritt 222 lediglich ein Steuerbefehl an das Empfänger-Mobiltelefon übermittelt. Enthält die Liste keinen mit der zu sendenden Sounddatei übereinstimmenden Dateinamen, wird gemäß Verfahrensschritt 223 ein Steuerbefehl und die Sounddatei selbst von dem Server an das Empfänger-Mobiltelefon übermittelt.

Sobald der Steuerbefehl von einem MIDIet des Empfänger-Mobiltelefons empfangen wurde, greift das betreffende MIDIet über JAVA Framework gemäß Verfahrensschritt 224 auf das Betriebssystem des Empfänger-Mobiltelefons zu. In einem letzten Verfahrensschritt 226 wird daraufhin die von dem Empfänger-Mobiltelefon empfangene bzw. die auf diesem gespeicherte Sounddatei von dem Betriebssystem abgespielt.

Das erfindungsgemäße Verfahren eignet sich insbesondere für Sounddateien in den Formaten MP3, AMR-nb und AMR-wb, ist jedoch grundsätzlich auch mit jedem anderen Sound-Format anwendbar. Die Versendung der Sounddatei durch den Server (Verfahrensschritt 223) kann im gleichen Format erfolgen, wie die Sounddatei auf dem Server hinterlegt ist bzw. auf dem Server von dem Sender-Mobiltelefon empfangen wurde. Eine vorherige Umwandlung durch den Server oder das Empfänger-Mobiltelefon ist nicht erforderlich. Zum Abspielen einer empfangenen Sounddatei auf dem Empfänger-Mobiltelefon werden von der JAVA-Applikation die handyinternen Codecs (MP3, AMR etc.) genutzt. Die Ansteuerung der Lautsprecher des Empfänger-Mobiltelefons erfolgt über das Betriebssystem.

Die abzuspielende Sounddatei kann auch in einem Datenspeicher des Empfänger-Mobiltelefons gecached werden. Dies ist jedoch nur dann sinnvoll, wenn das Empfänger-Mobiltelefon einen dafür ausgelegten Speicher aufweist.

Zur Klarstellung wird darauf hingewiesen, dass unter Mobiltelefon im Sinne der vorliegenden Erfindung sämtliche mobilen Kommunikationsgeräte verstanden werden, welche zur drahtlosen Sprachübertragung geeignet sind. Dazu zählen insbesondere auch Personal Digital Assistants (PDAs), Smartphones etc.

### Bezugszeichenliste

- 100: Systemarchitektur
- 102: erstes Mobiltelefon
- 104: zweites Mobiltelefon
- 106: drittes Mobiltelefon
- 108: Backend Server
- 110: Socket-Verbindungen oder http-Verbindungen
- 200: Ablaufdiagramm
- 202: Sender-Mobiltelefon-Bereich
- 204: Server-Bereich
- 206: Empfänger-Mobiltelefon-Bereich
- 208: Verfahrensschritt "Anzeige verfügbarer Sounddateien"
- 210: Verfahrensschritt "Auswahl Sounddatei"
- 212: Verfahrensschritt "Auswahl bestätigen?"
- 214: Verfahrensschritt "Abfrage: Sounddatei anhören?"
- 216: Verfahrensschritt "Sounddatei abspielen"
- 218: Verfahrensschritt "MIDIet übermittelt Datensatz an Server"
- 220: Verfahrensschritt "Autorisierungsprüfung"
- 221: Verfahrensschritt "Speicherprüfung des Empfänger-Mobiltelefons"
- 222: Verfahrensschritt "Server übermittelt Steuerbefehl an Empfänger-Mobiltelefon"
- 223: Verfahrensschritt "Server übermittelt Sound und Steuerbefehl an Empfänger-Mobiltelefon"
- 224: Verfahrensschritt "Zugriff auf Betriebssystem des Empfänger-Mobiltelefons"
- 226: Verfahrensschritt "Abspielen der Sounddatei durch Betriebssystem des Empfänger-Mobiltelefons"

## Patentansprüche

1. Verfahren zum Abspielen einer Sounddatei auf einem Empfänger-Mobiltelefon (102; 104; 106) mittels eines Sender-Mobiltelefons (102; 104; 106), umfassend folgende Schritte:
a) Ausführen einer Applikation auf dem Sender-Mobiltelefon (102; 104; 106) und auf dem Empfänger-Mobiltelefon (102; 104; 106),
b) mit Hilfe der Applikation des Sender-Mobiltelefons_(102; 104; 106) wird ein Identifikator einer Sounddatei und eine Kennung eines Empfänger-Mobiltelefons (102; 104; 106) ausgewählt,
c) der Identifikator der Sounddatei und die Kennung des Empfänger-Mobiltelefons (102; 104; 106) werden an einen Server (108) übermittelt,
d) von dem Server (108) wird ein Steuerbefehl in Verbindung mit dem Identifikator der Sounddatei und/oder der zu dem Identifikator gehörigen Sounddatei an das Empfänger-Mobiltelefon (102; 104; 106) übermittelt,
e) die ausgeführte Applikation auf dem Empfänger-Mobiltelefon (102; 104; 106) wird aufgrund des eingegangenen Steuerbefehls veranlasst, die Sounddatei unmittelbar auf dem Empfänger-Mobiltelefon (102; 104; 106) abzuspielen,
**dadurch gekennzeichnet,**
f) **dass** die Applikation eine JAVA-Applikation mit mindestens einem MIDIet ist und
g) **dass** das Verfahren nur zwischen Sender-Mobiltelefonen (102; 104; 106) und Empfänger-Mobiltelefonen (102; 104; 106) ausführbar ist, auf welchen die JAVA-Applikation installiert ist und ausgeführt wird und welche auf den gleichen oder miteinander verbundene Server (108) zugreifen und
h) **dass** von dem Sender-Mobiltelefon (102; 104; 106) eine Identifikationskennung des Sender-Mobiltelefons (102; 104; 106) an den Server 108) übermittelt wird und ein Vergleich dieser Identifikationskennung mit in einem Register hinterlegten Identifikationskennungen durchgeführt wird, wobei das Abspielen der Sounddatei auf dem Empfänger-Mobiltelefon (102; 104; 106) unterdrückt wird, wenn die Identifikationskennun des Sender-Mobiltele-fons (102; 104; 106) nicht mit einer Identifikationskennung des Registers übereinstimmt.

2. Verfahren nach Anspruch 1, **dadurch gekennzeichnet, dass** durch die JAVA-Applikation ein Zugriff auf mindestens eine Funktion des Betriebssystems ermöglicht wird.

3. Verfahren nach Anspruch 2, **dadurch gekennzeichnet, dass** durch die JAVA-Applikation ein Zugriff auf eine Wiedergabefunktion des Betriebssystems erfolgt und die Sounddatei unmittelbar durch das Betriebssystem abgespielt wird.

4. Verfahren nach einem der Ansprüche 1 bis 3, **dadurch gekennzeichnet, dass** aufgrund des von dem Server (108) an das Empfänger-Mobiltelefon (102; 104; 106) übermittelten Steuerbefehls die Sounddatei unmittelbar durch die JAVA-Applikation abgespielt wird.

5. Verfahren nach einem der vorstehenden Ansprüche, **dadurch gekennzeichnet, dass** das Register auf dem Server (108) gespeichert wird und der Vergleich der Identifikationskennung des Sender-Mobiltelefons (102; 104; 106) mit den in dem Register hinterlegten Identifikationskennungen von dem Server (108) durchgeführt wird.

6. Verfahren nach einem der Ansprüche 1-4, **dadurch gekennzeichnet, dass** das Register auf dem Empfänger-Mobiltelefon (102; 104; 106) gespeichert wird und der Vergleich der Identifikationskennung des Sender-Mobiltelefons (102; 104; 106) mit den in dem Register hinterlegten Identifikationskennungen von dem Empfänger-Mobiltelefon (102; 104; 106) durchgeführt wird.

7. Verfahren nach einem der Ansprüche 1 bis 6, **dadurch gekennzeichnet, dass** in einem auf dem Sender-Mobiltelefon gespeicherten Register Identifikationskennungen von autorisierten Empfänger-Mobiltelefonen gespeichert werden und vor der Übermittlung des Identifikators der Sounddatei und der Kennung des Empfänger-Mobiltelefons an den Server ein Vergleich der zu sendenden Kennung des Empfänger-Mobiltelefons mit den im Register gespeicherten Identifikationskennungen durchgeführt wird, um eine Übermittlung des Identifikators und der Sounddatei zu unterdrücken, wenn das Register keine mit der Kennung des Empfänger-Mobiltelefons übereinstimmende Identifikationskennung aufweist.

8. Verfahren nach einem oder mehreren der vorstehenden Ansprüche, **dadurch gekennzeichnet, dass** zur Auswahl einer Kennung eines Empfänger-Mobiltelefons (102; 104; 106) auf dem Sender-Mobiltelefon (102; 104; 106) eine Liste von zu dem Sender-Mobiltelefon (102; 104; 106) in dem Register gespeicherten Identifikationskennungen von Empfänger-Mobiltelefonen (102; 104; 106) und/oder von zu den Identifikationskennungen gehörigen Mitgliedsnummern und/oder Mitgliedsnamen einer Mobiltelefonnutzergruppe, bei der jedes Mitglied einen Mitgliedsnamen erhält, angezeigt wird.

9. Verfahren nach Anspruch 8, **dadurch gekennzeichnet, dass** Sender-Mobiltelefone (102; 104; 106) zum Abspielen von Sounddateien auf bestimmten Empfänger-Mobiltelefonen (102, 104; 106) von diesen autorisiert werden und zur Erzeugung der Liste mit Hilfe des Servers (108) überprüft wird, auf welchen der Empfänger-Mobiltelefone (102; 104; 106) die JAVA-Applikation aktiviert ist und dass in der Liste eines Sender-Mobiltelefons (102; 104; 106) ausschließlich Kennungen von Empfänger-Mobiltelefonen (102; 104; 106) angezeigt werden, die dieses Sender-Mobiltelefon (102; 104; 106) autorisiert haben und auf welchen die JAVA-Applikation aktiviert ist.

10. Verfahren nach einem der Ansprüche 1 bis 9, **dadurch gekennzeichnet, dass** vor der Übermittlung der ausgewählten Sounddatei an das Empfänger-Mobiltelefon (102; 104; 106) von dem Server (108) überprüft wird, ob die ausgewählte Sounddatei bereits auf dem Empfänger-Mobiltelefon (102; 104; 106) gespeichert ist, und eine erneute Übermittlung der ausgewählten Sounddatei von dem Server (108) an das Empfänger-Mobiltelefon (102; 104; 106) unterbleibt, wenn die ausgewählte Sounddatei auf dem Empfänger-Mobiltelefon (102; 104: 106) gespeichert ist.

11. Verfahren nach einem der Ansprüche 1 bis 10, **dadurch gekennzeichnet, dass** vor der Auswahl eines Identifikators einer Sounddatei über den Server (108) ausgelesen wird, welche Sounddateien auf einem Empfänger-Mobiltelefon (102; 104; 106) gespeichert sind.

12. Computerprogrammprodukt in Form einer JAVA-Applikation mit mindestens einem MIDlet zur Installation auf einem Mobiltelefon (102; 104; 106) und zur Durchführung aller Schnitte eines Verfahrens nach einem der Ansprüche 1 bis 11.

## Claims

1. A method for playing back a sound file on a receiver mobile telephone (102; 104; 106) by means of a transmitter mobile telephone (102; 104; 106), comprising the following steps:
a) execution of an application on the transmitter mobile telephone (102; 104; 106) and on the receiver mobile telephone (102; 104; 106),
b) with the assistance of the application on the transmitter mobile telephone (102; 104; 106), an identifier of a sound file and a code of a receiver mobile telephone (102; 104; 106) is selected,
c) the identifier of the sound file and the code of the receiver mobile telephone (102; 104; 106) are communicated to a server (108),
d) a control command is communicated from the server (108) to the receiver mobile telephone (102; 104; 106) in combination with the identifier of the sound file and/or of the sound file associated with the identifier,
e) on the basis of the received control command, the application executed on the receiver mobile telephone (102; 104; 106) is caused to play back the sound file directly on the receiver mobile telephone (102; 104; 106),
**characterised in that**
f) the application is a JAVA application with at least one MIDlet and
g) the method is only executable between transmitter mobile telephones (102; 104; 106) and receiver mobile telephones (102; 104; 106) on which the JAVA application is installed and is executed and which access the same server or servers (108) connected to one another and
h) an identification code of the transmitter mobile telephone (102; 104; 106) is communicated from the transmitter mobile telephone (102; 104; 106) to the server (108), and a comparison of this identification code with identification codes stored in a register is implemented, wherein the playback of the sound file on the receiver mobile telephone (102; 104; 106) is suppressed, if the identification code of the transmitter mobile telephone (102; 104; 106) does not agree with an identification code of the register.

2. The method according to claim 1
**characterised in that**
access to at least one function of the operating system is allowed by the JAVA application.

3. The method according to claim 2,
**characterised in that**
access to a playback function of the operating system takes place through the JAVA application, and the sound file is played back directly by the operating system.

4. The method according to any one of claims 1 to 3,
**characterised in that**
the sound file is played back directly by the JAVA application on the basis of the control command communicated from the server (108) to the receiver mobile telephone (102; 104; 106).

5. The method according to any one of the preceding claims,
**characterised in that**
the register is stored on the server (108), and the comparison of the identification code of the transmitter mobile telephone (102; 104; 106) is implemented by the server (108) with the identification codes stored in the register.

6. The method according to any one of claims 1 to 4,
**characterised in that**
the register is stored on the receiver mobile telephone (102; 104; 106), and the comparison of the identification code of the transmitter mobile telephone (102; 104; 106) is implemented by the receiver mobile telephone (102; 104; 106) with the identification codes stored in the register.

7. The method according to any one of claims 1 to 6,
**characterised in that**
identification codes of authorised receiver mobile telephones are stored in a register stored in the transmitter mobile telephone and, before the communication of the identifier of the sound file and the code of the receiver mobile telephone to the server, a comparison of the code of the receiver mobile telephone to be transmitted with the identification codes stored in the register is implemented, in order to suppress a communication of the identifier and of the sound file, if the register provides no identification code agreeing with the code of the receiver mobile telephone.

8. The method according to one or more of the preceding claims,
**characterised in that**,
for the selection of a code of a receiver mobile telephone (102; 104; 106), a list of identification codes of receiver mobile telephones (102; 104; 106) for the transmitter mobile telephone (102; 104; 106) stored in the register and/or of member numbers associated with the identification codes and/or member names of a mobile-telephone user group in which each member receives a member name, is displayed on the transmitter mobile telephone (102; 104; 106).

9. The method according to claim 8,
**characterised in that**
transmitter mobile telephones (102; 104; 106) are authorised to play back sound files on given receiver mobile telephones (102; 104; 106) by the latter and, in order to generate the list, a check is carried out with the assistance of the server (108) to determine on which of the receiver mobile telephones (102; 104; 106) the JAVA application is activated,
and that in the list of a transmitter mobile telephone (102; 104; 106), exclusively the codes of receiver mobile telephones (102; 104; 106) are displayed, which have authorised this transmitter mobile telephone (102; 104; 106) and on which the JAVA application is activated.

10. The method according to any one of claims 1 to 9,
**characterised in that**,
before the communication of the selected sound file to the receiver mobile telephone (102; 104; 106), a check is carried out by the server (108) to determine whether the selected sound file is already stored on the receiver mobile telephone (102; 104; 106), and a re-communication of the selected sound file from the server (108) to the receiver mobile telephone (102; 104; 106) is not implemented, if the selected sound file is stored on the receiver mobile telephone (102; 104; 106).

11. The method according to any one of claims 1 to 10,
**characterised in that**,
before the selection of an identifier of a sound file, the server (108) reads out which sound files are stored on a receiver mobile telephone (102; 104; 106).

12. A computer program product in the form of a JAVA application with at least one MIDlet for installation on a mobile telephone (102; 104; 106) and for the implementation of all the steps of a method according to any one of claims 1 to 11.

## Revendications

1. Procédé de lecture d'un fichier son sur un téléphone mobile récepteur (102 ; 104 ; 106) au moyen d'un téléphone mobile émetteur (102 ; 104 ; 106), comportant les étapes suivantes consistant à :
a) exécuter une application sur le téléphone mobile récepteur (102 ; 104 ; 106) et le téléphone mobile récepteur (102 ; 104 ; 106),
b) à l'aide de l'application du téléphone mobile émetteur (102 ; 104 ; 106), choisir un identifiant d'un fichier son et un indicatif du téléphone mobile récepteur (102; 104 ; 106),
c) transmettre l'identifiant du fichier son et l'indicatif du téléphone mobile récepteur (102 ; 104 ; 106) à un serveur (108),
d) depuis le serveur (108), transmettre une instruction de commande en lien avec l'identifiant du fichier son et/ou le fichier son appartenant à l'identifiant, au téléphone mobile récepteur (102 ; 104 ; 106),
e) amener l'application exécutée sur le téléphone mobile récepteur (102 ; 104 ; 106) à lire le fichier son transmis directement sur le téléphone mobile récepteur (102 ; 104 ; 106), sur la base de l'instruction de commande reçue **caractérisé en ce que**
f) l'application est une application JAVA avec au moins un MIDIet, et
g) le procédé est réalisable uniquement entre un téléphone mobile émetteur (102 ; 104 ; 106) et un téléphone mobile récepteur (102 ; 104 ; 106), sur lesquels l'application JAVA est installée et exécutée, et qui accèdent au même serveur (108), ou qui sont connectés mutuellement à celui-ci,
h) depuis le téléphone mobile émetteur (102 ; 104 ; 106), un indicatif de notification du téléphone mobile émetteur (102 ; 104 ; 106) va être transmis au serveur (108), et une comparaison de cet indicatif d'identification avec des indicatifs d'identification enregistrés dans un registre va être effectuée, de telle sorte que la lecture sur le téléphone mobile récepteur (102 ; 104 ; 106) va être empêchée lorsque l'indicatif d'identification du téléphone mobile émetteur (102 ; 104 ; 106) ne va pas correspondre à un indicatif d'identification du registre.

2. Procédé selon la revendication 1, **caractérisé en ce que** l'application JAVA va permettre un accès à au moins une fonction du système d'exploitation.

3. Procédé selon la revendication 2, **caractérisé en ce que** l'application JAVA offre un accès à une fonction de lecture du système d'exploitation, et le fichier son va être lu immédiatement au moyen du système d'exploitation.

4. Procédé selon l'une quelconque des revendications 1 à 3, **caractérisé en ce que** sur la base de l'instruction de commande transmise depuis le serveur (108) au téléphone mobile récepteur (102 ; 104 ; 106), le fichier son va être lu immédiatement au moyen de l'application JAVA.

5. Procédé selon l'une quelconque des revendications 1 à 4, **caractérisé en ce que** le registre va être sauvegardé sur le serveur (108), et la comparaison de l'indicatif d'identification du téléphone mobile émetteur (102 ; 104 ; 106) avec les indicatifs d'identification enregistrés dans le registre sur le serveur (108) va être effectuée.

6. Procédé selon l'une quelconque des revendications précédentes, **caractérisé en ce que** le registre va être sauvegardé sur le téléphone mobile récepteur (102 ; 104; 106), et la comparaison de l'indicatif d'identification du téléphone mobile émetteur (102 ; 104 ; 106) avec les indicatifs d'identification enregistrés dans le registre depuis le téléphone mobile récepteur (102 ; 104 ; 106) va être effectuée.

7. Procédé selon l'une quelconque des revendications 1 à 6, **caractérisé en ce que** les indicatifs d'identification de téléphones mobiles autorisés vont être enregistrés parmi ceux du registre enregistré sur le téléphone mobile émetteur, et pour la transmission de l'identifiant du fichier son et de l'indicatif du téléphone mobile récepteur vers un serveur, une comparaison de l'indicatif de téléphone mobile récepteur à envoyer avec les indicatifs d'identification enregistrés dans un registre va être effectuée, pour empêcher une transmission de l'identifiant et du fichier son, lorsque l'indicatif du téléphone mobile récepteur ne correspond à aucun indicatif d'identification conforme du registre.

8. Procédé selon l'une quelconque des revendications précédentes, **caractérisé en ce que** pour choisir un indicatif du téléphone mobile récepteur (102 ; 104 ; 106), une liste va être affichée sur le téléphone mobile émetteur (102 ; 104 ; 106), comprenant des indicatifs d'identification provenant de téléphones mobiles récepteurs (102 ; 104 ; 106) enregistrés dans le registre du téléphone mobile émetteur (102 ; 104 ; 106), et/ou des numéros de membre appartenant à des identificateurs d'identification et/ou des noms de membre d'un groupe d'utilisateurs de téléphone mobile, de telle sorte que chaque membre reçoit un nom de membre.

9. Procédé selon la revendication 8, **caractérisé en ce que** le téléphone mobile émetteur (102 ; 104 ; 106) va autoriser le téléphone mobile récepteur identifié (102 ; 104 ; 106) à lire le fichier son sur celui-ci, et va vérifier la création de la liste à l'aide du serveur (108), sur lequel l'application JAVA du téléphone mobile récepteur (102 ; 104 ; 106) est activée, et **en ce que** des indicatifs exclusifs vont être affichés dans la liste d'un téléphone mobile émetteur (102 ; 104; 106), provenant de téléphones mobiles récepteurs (102 ; 104 ; 106) que ce téléphone mobile émetteur (102 ; 104 ; 106) aura autorisés, et sur lesquels sera activée l'application JAVA.

10. Procédé selon l'une quelconque des revendications 1 à 9, **caractérisé en ce que** la transmission du fichier son choisi depuis le serveur (108) vers un téléphone mobile récepteur (102 ; 104 ; 106) va être vérifiée, si le fichier son choisi est déjà enregistré sur le téléphone mobile récepteur (102 ; 104 ; 106), et une nouvelle transmission du fichier son choisi ne sera pas effectuée depuis le serveur (108) vers le téléphone mobile récepteur (102 ; 104 ; 106), lorsque le fichier son choisi est enregistré sur le téléphone mobile récepteur (102 ; 104 ; 106).

11. Procédé selon l'une quelconque des revendications 1 à 9, **caractérisé en ce que** le choix d'un identifiant d'un fichier son sur le serveur (108) sera fait, lesquels fichiers son sont enregistrés sur un téléphone mobile récepteur (102 ; 104 ; 106).

12. Produit formant programme informatique sous la forme d'une application JAVA avec au moins un MIDIet pour une installation sur un téléphone mobile (102 ; 104 ; 106), et la mise en oeuvre de toutes les étapes d'un procédé selon l'une quelconque des revendications 1 à 11.
